# EUROPEAN PATENT SPECIFICATION

(11) **EP 3 318 475 B1**
(45) Date of publication and mention of the grant of the patent: **14.08.2019**
(21) Application number: 17199205.0
(22) Date of filing: 30.10.2017
(51) Int. Cl.: B62M 7/12, B62K 25/08, B62J 23/00, B62J 99/00, B62M 23/02

(54) **ELECTRIC MOTORCYCLE AND RELEVANT WIRING**
ELEKTRISCHES MOTORRAD UND RELEVANTE VERDRAHTUNG
MOTOCYCLETTE ÉLECTRIQUE ET CÂBLAGE APPROPRIÉ

(30) Priority: 08.11.2016 IT 201600112598
(43) Date of publication of application: 09.05.2018
(73) Proprietor: Visionar S.r.l., 62010 Montefano (MC) (IT)
(72) Inventor: RANALLI, Antonio, 62010 Montefano (MC) (IT); ANDREUCCI, Andrea, 60027 Osimo (AN) (IT)
(74) Representative: Cutropia, Gianluigi

(56) References cited:
- EP-A1- 2 233 390
- EP-A1- 2 394 903
- JP-A- 2013 006 528
- US-A- 4 878 558
- US-A1- 2011 036 656

## Description

The present patent application for invention relates to an electric motorcycle, and in particular to the wiring of an electrical motor used for driving motor vehicles and housed inside the wheel.

Electric motors are used both in hybrid motorcycles (where one or more internal combustion motors are assisted by one or more electric motors) and in completely electric motorcycles.

Generally speaking, the electric motor is disposed in the front wheel of the motorcycle in order to implement a four-wheel drive in a simpler way compared to other systems. A wiring must electrically connect the electric motor to the power supply system and to a control unit. Such a wiring comprises power cables for connection to the power supply system and signal cables for connection to the control unit.

The front wheel is connected to the frame of the motorcycle by means of suspensions that are used to insulate the frame from the road.

The travel of said suspensions may range from 100mm to 300mm according to whether the motorcycle is a road or an off-road motorcycle. During the motion of the front wheel, the wiring must be guided, otherwise it may interfere with other elements of the motorcycle, such as for example wheel or plastic parts, or with external elements, such as for example branches and trees, especially in the case of off-road motorcycles.

When the wheel that contains the electric motor is to be taken down for tire replacement or maintenance operations, the wiring of the electric motor needs to be disconnected and protected in order not to be damaged.

Moreover, the wiring of the electric motor must be protected against external agents, such as for example stones, branches, etc. especially during off-road use.

GB2265588 discloses a hybrid motorcycle with electric drive on both wheels.

US20100089671 discloses a hybrid motorcycle comprising a geared motor housed inside the front wheel.

However, neither GB2265588 nor US20100089671 disclose the mechanical configuration of the wiring of the electric motors in detail.

JP2013006528 discloses an electric motorcycle according to the preamble of claim 1 which comprises a motor housed in a front wheel.

The purpose of the present invention is to eliminate the drawbacks of the prior art by disclosing an electric motor provided with a wiring system of the motor that is reliable, versatile, simple, practical and suitable for being also used in off-road motorcycles with a large travel of the suspension assembly.

These purposes are achieved according to the invention with the characteristics of the independent claim 1.

Advantageous embodiments of the invention appear from the dependent claims.

The electric motor according to the invention comprises:
- an electric motor disposed in a hub assembly of a wheel of the motorcycle,
- a suspension that supports a shaft of the hub assembly,
- a plurality of internal cables connected to the electric motor,
- a first connector assembly disposed in the hub assembly and connecting the internal cables to a plurality of external cables,
- a second connector assembly disposed on the suspension and connecting the external cables to a plurality of upper cables,
- a plurality of rigid tubes inside which said upper cables are disposed, in such a way that the upper cables come out of the rigid tubes in correspondence of an upper part of the suspension,
- support and guide means connected to the suspension and intended to support and guide said rigid tubes, and
an electric power system and a control unit disposed in said motorcycle and connected to said upper cables that come out of the rigid tubes.

The main advantage of the electric motorcycle according to the invention is the functionality and reliability of the wheel and electric motor assembly compared to the prior art and to the traditional construction technology.

The wiring of the motorcycle according to the invention can be applied both to off-road and road motorcycles; the major advantages are obtained in off-road motorcycles because the travels of the suspension of the wheel wherein an electric motor is disposed are larger and the invention provides for a more reliable wiring of the electric motor.

Additional features of the invention will appear manifest from the detailed description below, which refers to merely illustrative, not limiting embodiments, wherein:
Fig. 1 is a partially interrupted perspective view of the electric motorcycle according to the invention;
Fig. 2 is a perspective view of the electric motor and of a first connector assembly disposed in the hub assembly of the front wheel of the motorcycle of Fig. 1;
Fig. 3 is a perspective view like Fig. 1, which shows the lower portion of the front suspension, wherein a protection is omitted to show a second connector assembly;
Fig. 4 is a side view of the suspension of the motorcycle according to the invention, wherein the protection and the guide are shown in a sectional view;
Fig. 5 is an exploded view of a telescopic arm of the front suspension, the protection and a connection cable;
Fig. 6 is an axial section of a bushing fixed to the shaft of the hub assembly and crossed by the wiring cables;
Fig. 7 is a perspective view of the hub assembly and an exploded view of a casing of the hub assembly;
Fig. 8 is a perspective exploded view of a second embodiment of the first connector assembly; and
Fig. 9 is an axial sectional view of the second embodiment of the first connector assembly.

With reference to the Figures, the motorcycle of the invention is described, which is generally indicated with reference numeral 100.

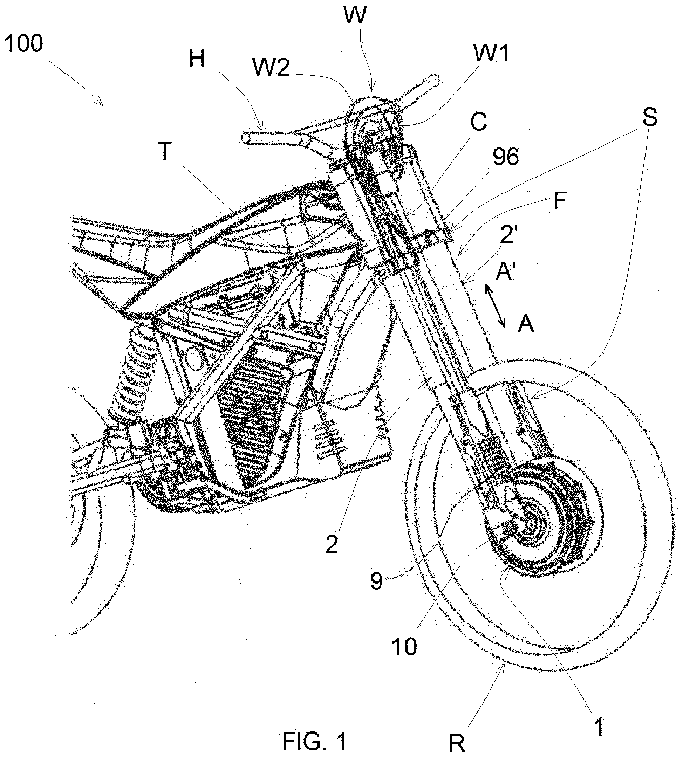

Fig. 1 shows the motorcycle (100) comprising a wheel (R) with a hub assembly (1). The hub assembly (1) comprises a shaft (10) connected in lower position to a suspension (F).

For illustrative purposes, the wheel (R) is a front wheel. In such a case, the suspension (F) is the front suspension, of steering type, revolvingly connected to a frame (T) of the motorcycle. A handlebar (H) is connected in upper position to the suspension (F). For example, the suspension (F) can be of fork type comprising two telescopic arms (2, 2') provided with internal shock absorber, in such a way to allow for travels in the direction of the arrows A-A'. The suspension (F) can comprise only one telescopic arm.

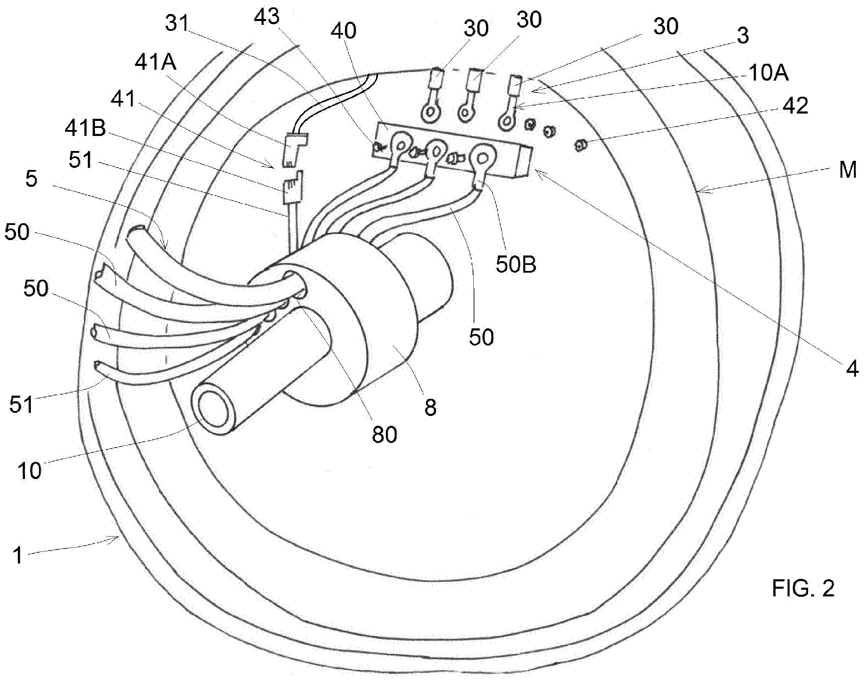

With reference to Fig. 2, an electric motor (M) is disposed inside the hub assembly (1). Although in the figures the motor (M) is disposed in the hub assembly of the front wheel supported by the front suspension, the electric motor (M) can be disposed in the hub assembly of the front wheel supported by the rear suspension that is of non-steering type.

A plurality of internal cables (3) is connected to the electric motor (M). A first connector assembly (4) is disposed in the hub assembly (1) and connects the internal cables (3) to a plurality of external cables (5) that are brought out of the hub assembly (1).

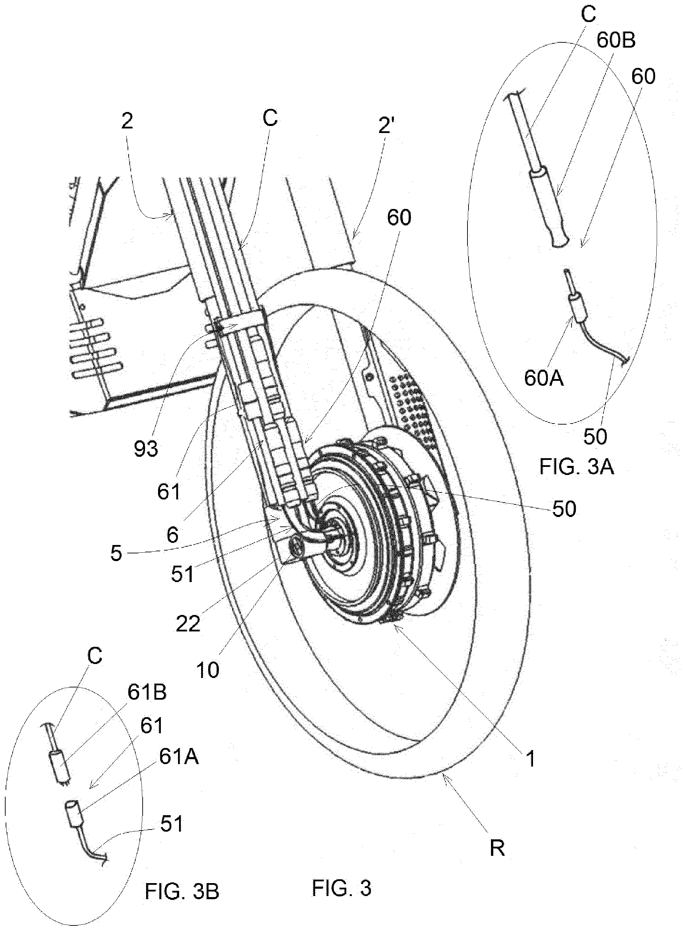

With reference to Fig. 3, a second connector assembly (6) is supported by a telescopic arm (2) of the suspension. The second connector assembly (6) connects the external cables (5) with a plurality of upper cables (W) (see Fig. 1) disposed in rigid tubes (C) supported by the telescopic arm (2) of the suspension.

With reference to Fig. 1, the upper cables (W) come out of the rigid tubes (C) in upper position and are inserted in an upper part of the suspension (F) to connect to a power supply system and to a control unit disposed in the motorcycle to power and control the electric motor (M).

Support and guide means (S) are mounted on the suspension (F) and support and guide the rigid tubes (C) along the suspension. The support and guide means (S) comprise a protection (9) disposed in a lower part of the suspension (F) and a guide (96) disposed in an upper part of the suspension (F).

With reference to Fig. 2, for illustrative purposes, the internal cables (3) comprise three unipolar power cables (30) with only one wire and one multipolar signal cable (31) with more wires. Likewise, the external cables (5) comprise three unipolar power cables (50) and one multipolar signal cable (51). With reference to Fig. 1, the upper cables (W) comprise three unipolar power cables (W1) and one multipolar signal cable (W2).

With reference to Fig. 2, the first connector assembly (4) comprises a power connector (40) that connects the power cables (30) and a signal connector (41) that connects the signal cables (31, 51).

The power connector (40) is an electrical terminal board. In such a case, rings contacts (10A, 50B) are disposed at the ends of the power cables (30) of the internal cable assembly and at the ends of the power cables (50) of the external cable assembly. The ring contacts (10A, 50B) of the power cables of the internal cable assembly and of the external cable assembly are inserted in the power connector (40) and fixed by means of screws (43) and nuts (42).

The signal connector (41) comprises a first element (41A) connected at the end of the signal cable (31) of the internal cables and a second element (41B) connected at the end of the signal cable (51) of the external cables. The first element (41A) and the second element (41B) of the signal connector can be the male and female elements of an RJ connector with a number of poles equal to the number of poles of the signal cables.

With reference to Fig. 3, the second connector assembly (6) comprises three power connectors (60) and one signal connector (61). The power connectors (60) connect the power cables (50) of the external cables with the power cables (W1) of the upper cables (W). The signal connector (61) connects the signal cable (51) of the external cables with the signal cable (W2) of the upper cables (W).

With reference to Fig. 3A, each power connector (60) comprises a first element (60A) connected at the end of the power cable (50) of the external cables and a second element (60B) connected at the end of the power cable (W1) of the upper cables. The rigid tube (C) is connected to the second element of the connector (60B) in such a way to contain the power cable (W1). The first element (60A) and the second element (60B) of the power connector can be the male and female elements of a jack connector.

With reference to Fig. 3B, the signal connector (61) comprises a first element (61A) connected at the end of the signal cable (51) of the external cables and a second element (61B) connected at the end of the signal cable (51) of the upper cables. The rigid tube (C) is connected to the second element of the connector (61B) in such a way to contain the signal cable (W2). The first element (61A) and the second element (61 B) of the signal connector can be the male and female elements of a DIN connector with a number of poles equal to the number of poles of the signal cables.

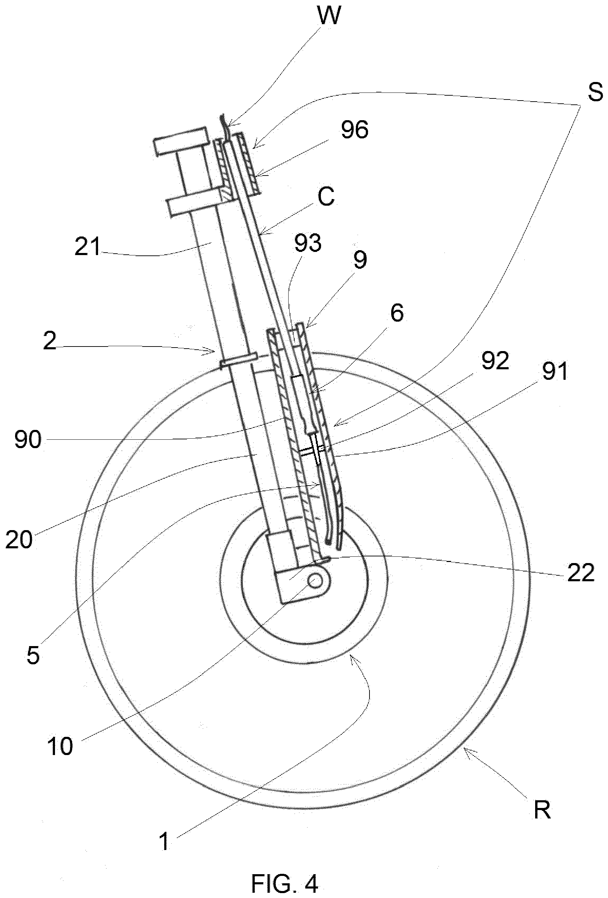

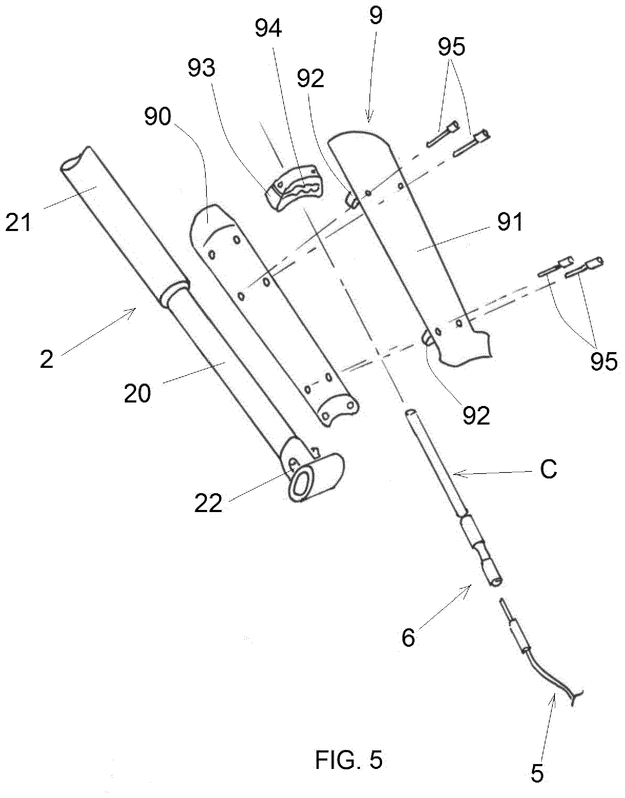

With reference to Figs. 4 and 5, the telescopic arm (2) of the suspension comprises an internal tube (20) that is slidingly mounted inside an external tube (21). The internal tube (20) has a foot (22) mounted at the lower end of the internal tube. The foot (22) is provided with a sleeve to receive the shaft (10) of the hub assembly.

The protection (9) is mounted on the arm (2) of the suspension to support and protect the rigid tubes (C) that contain the upper cables (W). The protection (9) comprises an internal shell (90) fixed to the foot (22) of the arm of the suspension, and an external shell (91) fixed to the internal shell (90) in such a way to leave a space between the two shells (90, 91) through which the rigid tubes (C) are passed. The internal shell (90) of the protection is spaced from the lower tube (20) of the arm of the suspension, in such a way to leave a space that is suitable for passing the external tube (21) of the suspension during the travel of the telescopic arm of the suspension.

Spacers (92) are disposed between the two shells (90, 91) to keep them separate. A terminal board (93) is disposed between the two shells (90, 91). The terminal board (93) is provided with holes (94) through which the rigid tubes (C) are passed. Screw means (95) are screwed in the shells (91, 90) for fixing said shells (91, 90) one to the other and to the foot (22) of the lower tube (20) of the suspension.

With reference to Figs. 1 and 4, the guide (96) is fixed on the external tube (21) of the suspension, and is suitable for making the rigid tubes (C) with the upper cables (W) pass and slide.

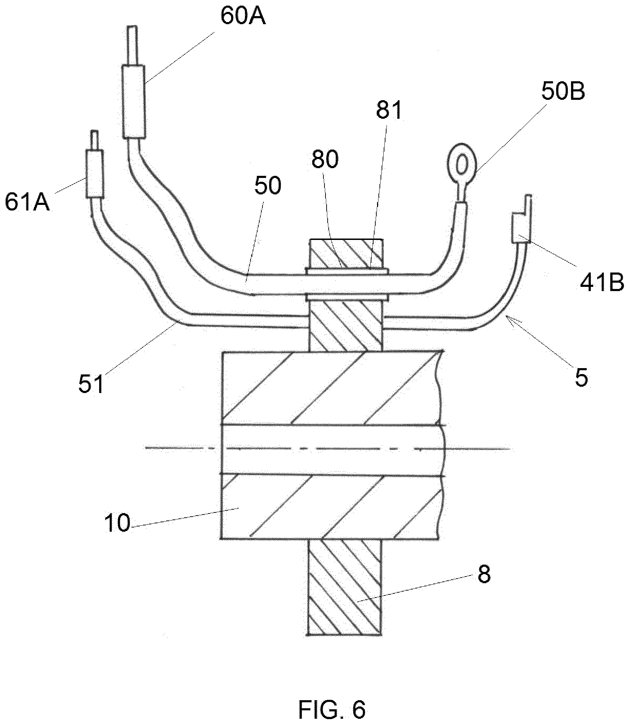

With reference to Figs. 2 and 6, a bushing (8) is fixed to the shaft (10) of the hub assembly (1). The bushing (8) has a plurality of through peripheral holes (80) equal to the number of the external cables (5). In view of the above, the external cables (5) are passed through the through peripheral holes (80) of the bushing in order to be brought out of the hub assembly (1). Seal material (81) in liquid, paste or solid form is inserted in the through peripheral holes (80) of the bushing, in such a way to ensure the tightness of the section of the hub assembly that is crossed by the external cables (5).

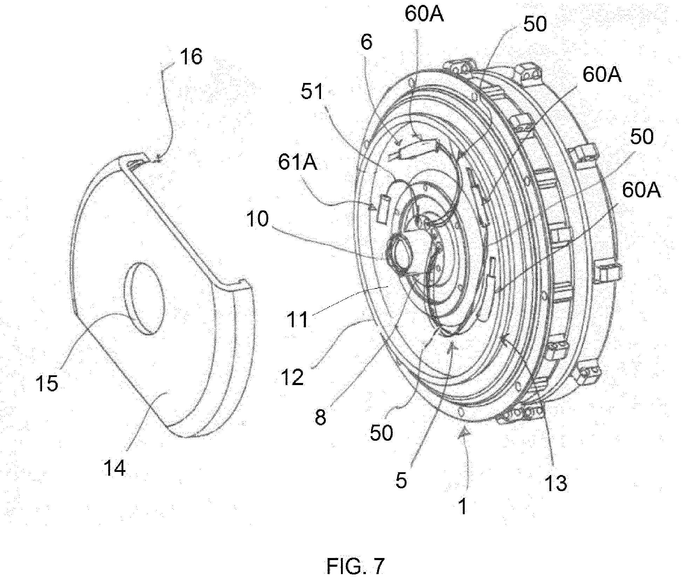

With reference to Fig. 7, the hub assembly (1) comprises a front flange (11) that covers the electric motor (M) and a peripheral collar (12) that projects frontally from the front flange (11). The peripheral collar (12) has an external groove (13).

A casing (14) is applied on the front flange (11) of the hub assembly. The casing (14) comprises an axial hole (15) crossed by the shaft (10) and teeth (16) that project inwards to be engaged in the external groove (13) of the collar of the hub assembly. In such a way, a housing is generated between the front flange (11) and the casing (14), which is suitable for containing the external cables (5). The casing (14) has smaller dimensions than the circumference defined by the collar (12) of the hub assembly, in such a way to define openings to let out the elements (60A, 61A) of the second connector assembly connected at the ends of the external cables (5).

When the wheel (R) is taken down for maintenance purposes, the elements (60A, 61A) of the second connector assembly connected at the ends of the external cables (5) are contained and protected in the space behind the casing (14), as shown in Fig. 7.

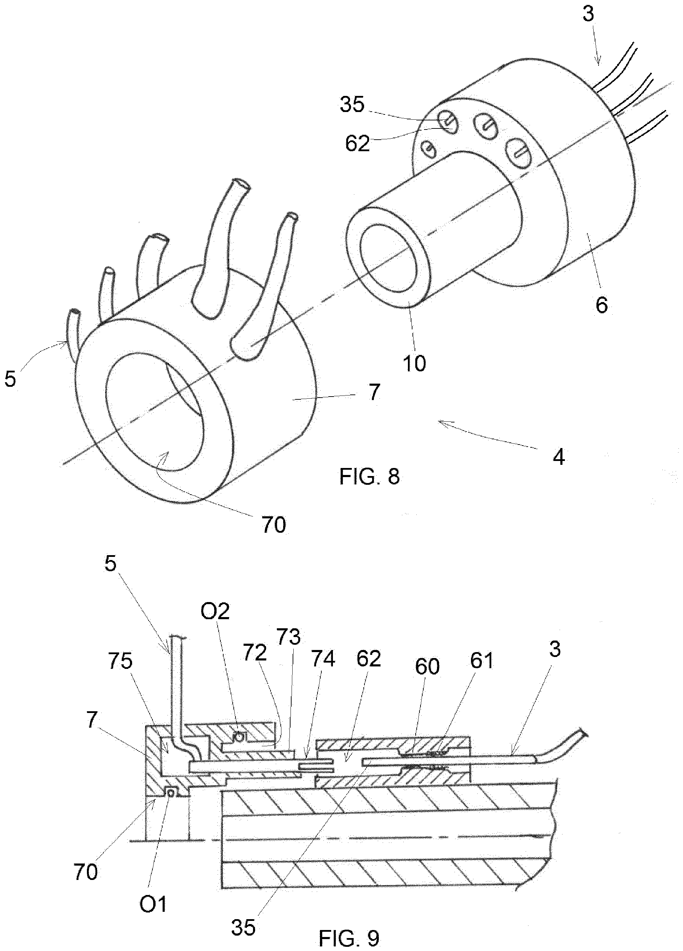

Figs. 8 and 9 show a second embodiment of the first connector assembly (4).

In such a case, the first connector assembly (4) comprises a first bushing (6) fixed to the shaft (10) of the hub assembly, and a second bushing (7) suitable for being coupled with the first bushing (6).

The first bushing (6) has a plurality of peripheral holes (60) through which the internal cables (3) connected to the electric motor are passed. Seal material (61) in liquid, paste or solid form is inserted in the peripheral holes (60) of the first bushing, in such a way to ensure the tightness of the section of the hub assembly crossed by the internal cables (3). One end (35) of each internal cable (3) is contained in a corresponding housing (62) obtained in the first bushing (6).

The second bushing (7) has an axial hole (70) that is crossed by the shaft (10) of the hub assembly. The second bushing (7) has a cylindrical housing (72) that is suitable for receiving the first bushing (6). A plurality of shanks (73) suitable for being inserted in the peripheral housings (62) of the first bushing is obtained in the cylindrical housing (72) of the second bushing. A contact (74), such as a fork contact suitable for fastening the end (35) of the internal cable that is disposed in the peripheral housing (62) of the first bushing, is disposed in each shank (73).

One end of each contact (74) is connected to a corresponding external cable (5) that passes through a housing (75) of the second bushing in order to come out radially from the lateral wall of the second bushing. OR seals (O1, O2) are respectively disposed in the axial hole (70) and in the cylindrical housing (72) of the second bushing to ensure tightness with the shaft (10) and with the first bushing (6).

Numerous equivalent variations and modifications can be made to the present embodiments of the invention, which are within the reach of an expert of the field and fall in any case within the scope of the invention.

## Claims

1. Electric motorcycle (100) comprising:
- an electric motor (M) disposed in a hub assembly (1) of a wheel (R) of the motorcycle,
- a suspension (F) supporting a shaft (10) of the hub assembly,
**characterized in that**
said electric motorcycle (1) further comprises:
- a plurality of internal cables (3) connected to the electric motor,
- a first connector assembly (4) disposed in the hub assembly (1) and connecting the internal cables (3) to a plurality of external cables (5),
- a second connector assembly (6) disposed on the suspension (F) and connecting the external cables (5) to a plurality of upper cables (W),
- a plurality of rigid tubes (C) inside which said upper cables (W) are disposed, in such a way that the upper cables (W) come out of the rigid tubes (C) in correspondence of an upper part of the suspension (F),
- support and guide means (S) connected to the suspension and intended to support and guide said rigid tubes, and
- an electric power system and a control unit disposed in said motorcycle and connected to said upper cables (W) coming out of the rigid tubes (C).

2. The electric motorcycle (1) of claim 1, wherein said plurality of internal cables (3) comprises unipolar power cables (30) and a multipolar signal cable (31), said plurality of external cables (5) comprises unipolar power cables (50) and a multipolar signal cable (51) and said plurality of upper cables (W) comprises unipolar power cables (W1) and a multipolar signal cable (W2).

3. The electric motorcycle (1) of claim 1 or 2, wherein said support and guide means (S) comprise a protection (9) disposed in a lower part of the suspension (F) and a guide (96) disposed in an upper part of the suspension.

4. The electric motorcycle (1) of claim 3, wherein said suspension (F) comprises a telescopic arm (2) comprising an internal tube (20) with a foot (22) connected to said shaft (10) of the hub assembly and sliding inside an external tube (21);
said protection (9) comprises an internal shell (90) fixed to the foot (22) of the internal tube (20) of the suspension, an external shell (91) fixed to the internal shell (90) and a terminal board (93) disposed between the two shells, in such manner to leave a space between the two shells through which said rigid tubes (C) are passed, being held by the terminal board (93); and
said guide (96) is disposed in an upper part of the external tube (21) of the suspension.

5. The electric motorcycle (1) of any one of the preceding claims, wherein said hub assembly (1) comprises a bushing (8) disposed around said shaft (10) and provided with peripheral through holes (80) through which said external cables (5) are passed and taken out of the hub assembly.

6. The electric motorcycle (1) of claim 2 or of any one of claims 3 to 5, when taken dependent on claim 2, wherein said first connector assembly (4) comprises:
- a power connector (40) connecting the internal power cables (30) to the external power cables (50) and
- a signal connector (41) connecting the internal signal cable (31) to the external signal cable (51).

7. The electric motorcycle (1) of claim 6, wherein
said power connector (40) is a terminal board and the ends of said internal power cables (30) and of said external power cables (50) are provided with ring contacts (10A, 50B) intended to be engaged in said terminal board; and
said signal connector (41) is an RJ connector comprising male and female elements (41A, 41B).

8. The electric motorcycle (1) of any one of claims 2 to 4, wherein said first connector assembly (4) comprises:
- a first bushing (6) fixed on said shaft (10) of the hub assembly and provided with peripheral holes (60) that receive said internal cables (3) so that one end (35) of the internal cables is situated in peripheral housings (62) of the first bushing, and
- a second bushing (7) with an axial hole (70) to receive the shaft (10) of the hub assembly, a cylindrical housing (72) to receive said first bushing (6), a plurality of shanks (73) disposed in said cylindrical housing (72) to be engaged in said peripheral housings (62) of the first bushing,
electric contacts (74) disposed in said shanks (73) and intended to come in contact with said ends (35) of the internal cables, wherein the external cables (5) are radially passed through said second bushing (7) and are connected to said electric contacts (74).

9. The electric motorcycle (1) of any one of claims 2, 6 and 7 or of any one of claims 3 to 5 and 8, when taken dependent on claim 2, wherein said second connector assembly (6) comprises:
- a plurality of power connectors (60) wherein each power connector (60) connects an external power cable (50) to an upper power cable (W1) and
- a signal connector (61) connecting the external signal cable (51) to the upper signal cable (W2).

10. The electric motorcycle (1) of claim 9, wherein
said power connectors (60) are jack connectors comprising male and female elements (60A, 60B); and
said signal connector (61) is a DIN connector comprising male and female elements (61A, 61B).

## Patentansprüche

1. Elektromotorrad (100), umfassend:
- einen Elektromotor (M), der in einer Nabenanordnung (1) eines Rades (R) des Motorrades angeordnet ist,
- eine Aufhängung (F), die eine Welle (10) der Nabenanordnung trägt,
**dadurch gekennzeichnet, dass**
das Elektromotorrad (1) ferner Folgendes umfasst:
- eine Mehrzahl von mit dem Elektromotor verbundenen, internen Kabeln (3),
- eine erste Verbinderanordnung (4), die in der Nabenanordnung (1) angeordnet ist und die internen Kabel (3) mit einer Mehrzahl von externen Kabeln (5) verbindet,
- eine zweite Verbinderanordnung (6), die in der Aufhängung (F) angeordnet ist und die externen Kabel (5) mit einer Mehrzahl von oberen Kabeln (W) verbindet,
- eine Mehrzahl von starren Rohren (C), in denen die oberen Kabel (W) derart angeordnet sind, dass die oberen Kabel (W) aus den starren Rohren (C) in einem oberen Teil der Aufhängung (F) austreten,
- Träger- und Führungsmittel (S), die mit der Aufhängung verbunden und dazu bestimmt sind, die starren Rohre zu tragen und zu führen, und
- ein Stromversorgungssystem und eine Steuereinheit, die in dem Motorrad angeordnet und mit den oberen, aus den starren Rohren (C) austretenden Kabeln (W) verbunden sind.

2. Elektromotorrad (1) nach Anspruch 1, wobei die Mehrzahl interner Kabel (3) einpolige Netzkabel (30) und ein mehrpoliges Signalkabel (31) umfasst, wobei die Mehrzahl externer Kabel (5) einpolige Netzkabel (50) und ein mehrpoliges Signalkabel (51) umfasst und die Mehrzahl oberer Kabel (W) einpolige Netzkabel (W1) und ein mehrpoliges Signalkabel (W2) umfasst.

3. Elektromotorrad (1) nach Anspruch 1 oder 2, wobei die Träger- und Führungsmittel (S) einen in einem unteren Teil der Aufhängung (F) angeordneten Schutz (9) und eine in einem oberen Teil der Aufhängung angeordnete Führung (96) umfassen.

4. Elektromotorrad (1) nach Anspruch 3, wobei die Aufhängung (F) einen Teleskoparm (2), umfassend ein Innenrohr (20) mit einem Fuß (22) umfasst, der mit der Welle (10) der Nabenanordnung verbunden und in einem Innenrohr (21) verschiebbar ist;
der Schutz (9) umfasst einen am Fuß (22) des Innenrohres (20) der Aufhängung befestigten Innenmantel (90), einen an dem Innenmantel (90) befestigten Außenmantel (91) und ein zwischen den beiden Mänteln angeordnetes Klemmbrett (93), derart, dass ein Zwischenraum zwischen den beiden Mänteln verbleibt, durch den die starren Rohre (C) geführt sind, die von dem Klemmbrett (93) gehalten werden;
die Führung (96) ist in einem oberen Teil des Außenrohres (21) der Aufhängung angeordnet.

5. Elektromotorrad (1) nach einem der vorstehenden Ansprüche, wobei die Nabenanordnung (1) eine Buchse (8) umfasst, die um die Welle (10) herum angeordnet und mit peripheren Durchgangslöchern (80) versehen ist, durch die die externen Kabel (5) hindurchgeführt sind, um aus der Nabenanordnung auszutreten.

6. Elektromotorrad (1) nach Anspruch 2 oder einem der Ansprüche 3 bis 5, sofern abhängig von Anspruch 2, wobei die erste Verbinderanordnung (4) umfasst:
- einen ersten Netzverbinder (40), der die internen Netzkabel (30) mit den externen Netzkabeln (50) verbindet, und
- einen Signalverbinder (41), der das interne Signalkabel (31) mit dem externen Signalkabel (51) verbindet.

7. Elektromotorrad (1) nach Anspruch 6, wobei
der Netzverbinder (40) ein Klemmbrett ist und wobei an den Endabschnitten der internen Netzkabel (30) und der externen Netzkabel (50) Ringkontakte (10A, 50B) angeordnet sind, die dazu geeignet sind, das Klemmbrett in Eingriff zu nehmen; und
der Signalverbinder (41) ein RJ-Verbinder ist, der Steck- und Aufnahmeelemente (41A, 41B) umfasst.

8. Elektromotorrad (1) nach einem der Ansprüche 2 bis 4, wobei die erste Verbinderanordnung (4) umfasst:
- eine erste Buchse (6), die an der Welle (10) der Nabenanordnung befestigt und mit peripheren Durchgangslöchern (60) versehen ist, die die internen Kabel (3) derart aufnehmen, dass ein Endabschnitt (35) der internen Kabel sich in peripheren Sitzen (62) der ersten Buchse befindet und
- eine zweite Buchse (7) mit einem axialen Loch (70) zur Aufnahme der Welle (10) der Nabenanordnung, einen zylindrischen Sitz (72) zur Aufnahme der ersten Buchse (6), eine Mehrzahl von Schäften (73), die in dem zylindrischen Sitz (72) angeordnet sind, um die peripheren Sitze (62) der ersten Buchse in Eingriff zu nehmen, elektrische Kontakte (74), die in den Schäften (73) angeordnet und dazu bestimmt sind, mit den Endabschnitten (35) der internen Kabel in Kontakt zu kommen, wobei die externen Kabel (5) radial durch die zweite Buchse (7) hindurchgeführt und mit den elektrischen Kontakten (74) verbunden sind.

9. Elektromotorrad (1) nach einem der Ansprüche 2, 6 und 7 oder einem der Ansprüche 3 bis 5 und 8, sofern abhängig von Anspruch 2, wobei die Verbinderanordnung (6) umfasst:
- eine Mehrzahl von Netzverbindern (60), wobei jeder Netzverbinder (60) ein externes Netzkabel (50) mit einem oberen Netzkabel (W1) verbindet und
- einen Signalanschluss (61), der das externe Signalkabel (51) mit dem oberen Signalkabel (W2) verbindet.

10. Elektromotorrad (1) nach Anspruch 9, wobei
die Netzverbinder (60) Buchsenverbinder sind, die Steck- und Aufnahmeelemente (60A, 60B) umfassen; und
der Signalverbinder (61) ein DIN-Verbinder ist, der Steck- und Aufnahmeelemente (61A, 61B) umfasst.

## Revendications

1. Motocyclette électrique (100) comprenant :
- un moteur électrique (M) disposé dans un groupe moyeu (1) d'une roue (R) de la motocyclette,
- une suspension (F) soutenant un arbre (10) du groupe moyeu,
**caractérisée en ce que**
ladite motocyclette électrique (1) comprend également :
- une pluralité de câbles internes (3) reliés au moteur électrique,
- un premier groupe connecteur (4) disposé dans le groupe moyeu (1) et reliant les câbles internes (3) à une pluralité de câbles externes (5),
- un second groupe connecteur (6) disposé sur la suspension (F) et reliant les câbles externes (5) à une pluralité de câbles supérieurs (W),
- une pluralité de tuyaux rigides (C) dans lesquels sont disposés lesdits câbles supérieurs (W), de sorte que les câbles supérieurs (W) sortent des tuyaux rigides (C) en correspondance d'une partie supérieure de la suspension (F),
- des moyens de support et de guidage (S) reliés à la suspension et aptes à soutenir et guider lesdits tuyaux rigides, et
- un circuit d'alimentation électrique et une unité de commande disposés dans ladite motocyclette et reliés aux dits câbles supérieurs (W) qui sortent des tuyaux rigides (C).

2. Motocyclette électrique (1) selon la revendication 1, où ladite pluralité de câbles internes (3) comprend des câbles de puissance (30) unipolaires et un câble de signal (31) multipolaire, ladite pluralité de câbles externes (5) comprend des câbles de puissance (50) unipolaires et un câble de signal (51) multipolaire et ladite pluralité de câbles supérieurs (W) comprend des câbles de puissance (W1) unipolaires et un câble de signal (W2) multipolaire.

3. Motocyclette électrique (1) selon la revendication 1 ou 2, où lesdits moyens de support et de guidage (S) comprennent une protection (9) disposée sur une partie inférieure de la suspension (F) et un guide (96) disposé dans une partie supérieure de la suspension.

4. Motocyclette électrique (1) selon la revendication 3, où ladite suspension (F) comprend un bras télescopique (2) comprenant un tuyau interne (20) ayant un pied (22) relié au dit arbre (10) du groupe moyeu et coulissant dans un tuyau externe (21) ;
ladite protection (9) comprend une coque interne (90) fixée au pied (22) du tuyau interne (20) de la suspension, une coque externe (91) fixée à la coque interne (90) et un bornier (93) disposé entre les deux coques, de manière à laisser un écartement entre les deux coques à travers lequel passent lesdits tuyaux rigides (C) qui sont retenus par le bornier (93) ; et
ledit guide (96) est disposé dans une partie supérieure du tuyau externe (21) de la suspension.

5. Motocyclette électrique (1) selon l'une quelconque des revendications précédentes, où ledit groupe moyeu (1) comprend une bague (8) disposée autour du dit arbre (10) et munie d'orifices périphériques passant (80) à travers lesquels passent lesdits câbles externes (5) pour être amenés hors du groupe moyeu.

6. Motocyclette électrique (1) selon la revendication 2 ou l'une quelconque des revendications de 3 à 5, quand dépendante de la 2, où ledit premier groupe connecteur (4) comprend :
- un connecteur de puissance (40) qui relie les câbles internes de puissance (30) aux câbles externes de puissance (50) et
- un connecteur de signal (41) qui relie le câble interne de signal (31) au câble externe de signal (51).

7. Motocyclette électrique (1) selon la revendication 6, où
ledit connecteur de puissance (40) est un bornier électrique et aux extrémités des dits câbles internes de puissance (30) et des dits câbles externes de puissance (50) sont disposés des contacts à anneau (10A, 50B) aptes à s'engager dans ledit bornier électrique ; et
ledit connecteur de signal (41) est un connecteur de type RJ comprenant des éléments mâles et femelles (41A, 41B).

8. Motocyclette électrique (1) selon l'une quelconque des revendications de 2 à 4, où ledit premier groupe connecteur (4) comprend :
- une première bague (6) fixée sur ledit arbre (10) du groupe moyeu et munie d'orifices périphériques (60) qui accueillent lesdits câbles internes (3) de manière qu'une extrémité (35) des câbles internes se trouve dans des emplacements périphériques (62) de la première bague, et
- une seconde bague (7) ayant un orifice axial (70) pour accueillir l'arbre (10) du groupe moyeu, un emplacement cylindrique (72) pour accueillir ladite première bague (6), une pluralité de tiges (73) disposées dans ledit emplacement cylindrique (72) pour s'engager dans lesdits emplacements périphériques (62) de la première bague, des contacts électriques (74) disposés dans lesdites tiges (73) et aptes à entrer en contact avec lesdites extrémités (35) des câbles internes, où les câbles externes (5) traversent radialement ladite seconde bague (7) et se relient aux dits contact électriques (74).

9. Motocyclette électrique (1) selon l'une quelconque des revendications 2, 6 et 7 ou l'une quelconque des revendications de 3 à 5 et 8, quand dépendante de la 2, où ledit second groupe connecteur (6) comprend :
- une pluralité de connecteurs de puissance (60) où chaque connecteur de puissance (60) relie un câble externe de puissance (50) à un câble supérieur de puissance (W1) et
- un connecteur de signal (61) qui relie le câble externe de signal (51) au câble supérieur de signal (W2).

10. Motocyclette électrique (1) selon la revendication 9, où
lesdits connecteurs de puissance (60) sont des connecteurs du type enfichable comprenant des éléments mâles et femelles (60A, 60B) ; et
ledit connecteur de signal (61) est un connecteur du type DIN comprenant des éléments mâles et femelles (61A, 61B).
